Europäisches Patentamt

European Patent Office

Office européen des brevets

(11) Veröffentlichungsnummer: **0 502 228 A1**

# EUROPÄISCHE PATENTANMELDUNG

(21) Anmeldenummer: **91103440.3**

(22) Anmeldetag: **06.03.91**

(51) Int. Cl.5: **H01S 3/038**, H01S 3/036

(43) Veröffentlichungstag der Anmeldung:
**09.09.92 Patentblatt 92/37**

(84) Benannte Vertragsstaaten:
**AT BE CH DE DK ES FR GB GR IT LI NL SE**

(71) Anmelder: **Osmanow, Rustem Dr.**
**Ortolfstrasse 150**
**O-1185 Berlin(DE)**
Anmelder: **Winkelmann, Gerhard Dr.**
**Germanenstrasse 98**
**O-1185 Berlin(DE)**
Anmelder: **Linke, Eberhard Dr.**
**Mollstrasse 33**
**O-1055 Berlin(DE)**

(72) Erfinder: **Osmanow, Rustem Dr.**
**Ortolfstrasse 150**
**O-1185 Berlin(DE)**
Erfinder: **Winkelmann, Gerhard Dr.**
**Germanenstrasse 98**
**O-1185 Berlin(DE)**
Erfinder: **Linke, Eberhard Dr.**
**Mollstrasse 33**
**O-1055 Berlin(DE)**

(74) Vertreter: **Christiansen, Henning, Dipl.-Ing.**
**Patentanwalt Pacelliallee 43/45**
**W-1000 Berlin 33(DE)**

(54) **Multigas-Excimerlaser.**

(57) Multigas-Excimerlaser mit einem Entladungsvolumen im Innern des Vorratsgefäßes (9), der für mittlere bis hohe Leistungen einen hohen Wirkungsgrad aufweist, der Verunreinigungen vermeidet und eine hohe Lebensdauer gewährleistet, bei dem an der Gegenelektrode (5) ein Strömungsleitblech (4), ein zweites Blech (11) und/oder eine Leiste (2) zur Lenkung der Gasströmung über die Elektroden (5, 6) durch Kühler (10), Lüfter (1) und gegebenenfalls einen Laminator (3) vorgesehen ist, so daß die Gasumwälzung nahezu im Kreis geführt wird. Das Strömungsleitblech (4) ist niederinduktiver Anschluß zu den Kondensatoren (8). Ein Vorionisationsblech (14) ermöglicht mit Vorionisationsstiften (16) in der Nähe der Elektrode (6) eine effektive UV-Vorionisation und eine Abschattung des Hochspannungsisolators (15) vor direktem UV-Licht, bei minimalen Abstand zwischen der Elektrode (6) und dem Strömungsleitblech (4). Durch elektroakustische Filter (12) wird ein spezieller Schutz der Laserfenster vor Verunreinigungen erreicht.

Fig. 2

Die Erfindung betrifft einen Multigas-Excimerlaser, der als leistungsstarke monochromatische Strahlungsquelle für die Materialbearbeitung, für die Steuerung fotochemischer Reaktionen, in der Medizin, für die Laserlithografie und in der Analytik, vor allem für die Spektroskopie, eingesetzt werden kann.

Multigas-Excimerlaser sind für den Einsatz mit verschiedenen Edelgashalogenidmischungen (XeCl 308 nm, ArF 193 nm, KrF 248 nm usw.) sowie für den Betrieb mit anderen Gasen ($N_2$ 337 m, $CO_2$ 10600 nm) geeignet. Diese leistungsstarken Impulsgaslaser mit Gasdrücken $\geq 1$ atm des TEA (transversal elekrisch angeregten)-Typs müssen, um effektiv ausgerüstet sein, um einen möglichst großen und homogenen Entladungsquerschnitt senkrecht zur optischen Achse und zur Längsrichtung der Elektroden zu erzielen. Diese erfolgt entweder durch Gleitentladung (W.Ju. Baranow u.a. Kvant. Elektronika 1981 8 (1) S. 77-82), durch eine Koronaentladung (DE-OS 3 035 730, 3 313 811, 2 932 781) oder durch eine Funkenentladung, die an einer Vielzahl entweder in Reihe (US-PS 4 105 952) oder parallel (US-PS 4 287 483) zur Hauptentladung geschalteter Elektrodenspitzen erzeugt wird. Bei der Funkenvorionisation (W.Ju. Baranow u.a. "Elektrorasrjadnye eksimernye laseri na galogenidach inertnych gasow", Energatomisdat, Moskau 1980, S.17) treten Nachteile insbesondere im Zusammenhang mit störenden Sekundärentladungen zur gegenüberliegenden Elektrode und einer durch die Vorionisationsfunken verursachten UV-Bestrahlung der Gehäusewandung, der Halterungen und speziell der Isoliermaterialien auf, da dies die Lebensdauer der Bauteile und der Gasfüllung herabsetzt.

Excimerlaser mit dem Entladungsvolumen im Innern des Vorratsgefäßes verwenden bisher großflächige, aus isolierendem Material bestehende Wandflächen zur Befestigung der pilzförmigen, durchgeführten ersten Elektrode und aufwendige Säulenkonstruktionen für die Halterung der zweiten Elektrode und die Versorgung der Vorionisationsfunken (DE-OS 3 601 599), wobei einige Säulen für die UV-Funkenvorionisation, die im inneren Entladekreis liegen, unterbrochen sind. Dabei ergeben sich entweder große Abstände der Vorionisationsfunken von der Hauptentladung, d.h. eine uneffektive Vorionisation, oder ungünstige Potentialverteilungen in der Umgebung der Elektroden, die den Wirkungsgrad herabsetzen (J. Appl. Phys. 60 (8), 1986, 2721).

Diese Konstruktionen sind zum Teil auf ungünstige Materialeigenschaften der hierbei verwendeten halogenbeständigen, isolierenden Polymerwerkstoffe zurückzuführen und bergen daher viele Nachteile in sich. Insbesondere zur Erhöhung der Gaslebensdauer müssen Gewinde von Schraubverbindungen im Inneren des Vorratsgefäßes weitestgehend vermieden werden.

Entladungsgepumpte Excimerlaser mit automatischer Funkenvorionisation und langgestreckten Entladungsvolumina sind auch in solchen Bauformen bekannt, die den Entladungskanal außen an ein Vorratsgefäß anflanschen und ihn über zahlreiche Durchbrüche mit ihm verbinden.

Letztere Konstruktion hat sich insbesondere beim Betrieb mit höheren mittleren Leistungen (Folgefreguenz * Impulsenergie) als ungünstig erwiesen, da die erforderliche Gasströmung umgelenkt werden muß und durch diese Öffnungen bzw. Stege im Vorratsgefäß erheblich behindert wird.

Bei der Materialauswahl, insbesondere für den Aufbau fluorstabiler Excimerlaser haben sich für die Laserkammer bzw. das Vorratsgefäß Aluminiumlegierungen oder Edelstahl durchgesetzt.

Die Isolierkörper zwischen den Elektroden stehen oft dicht am aktiven Laservolumen, wo sie leicht erodieren. Sie bestehen daher i.a. aus kompakten inerten Isoliermaterialien (Fluoroplaste oder Spezialkeramiken), die sehr kostenaufwendig sind (WO 88/00403, DE-OS 3 242 085). Die Elektroden bestehen entweder aus Edelstahl, massivem Nickel oder speziellen Legierungen (DE-OS 3 817 145) oder sind aus Kupfer und mit Nickel plattiert (WO 8 900 350), was sehr kostenintensiv oder technisch aufwendig ist.

Die Erfindung bezweckt die oben genannten Nachteile zu beseitigen und einen Multigas-Excimerlaser mit einem im Innern des Vorratsgefäßes angeordneten Entladungsvolumen, mit effektiver UV-Funkenvorionisation für mittlere bis hohe Leistungen zu entwickeln.

Die Aufgabe der Erfindung besteht darin, einen kompakten, kostengünstig herzustellenden Multigas-Excimerlaser mit hoher Vakuum- und Druckdichtigkeit sowie mit einer effektiven Vorionisationsanordnung und günstiger Potentialverteilung in der Umgebung der Elektroden bei ausreichender Hochspannungsfestigkeit anzugeben, der auch bei hohen Impulsfolgefrequenzen für Laser von mittleren bis höheren Leistungen eine effektive Gasumwälzung und einen hohen Wirkungsgrad aufweist. Durch konstruktive Maßnahmen sollen Verunreinigungen innerhalb des Vorratsgefäßes vermieden und eine hohe Lebensdauer der Bauteile und der Gasfüllung gewährleistet und außerdem ein spezieller Schutz der Fenster des Vorratsgefäßes (Laserfenster) erreicht werden.

Erfindungsgemäß wird die Aufgabe in der in Anspruch 1 dargelegten Weise gelöst.

Der Multigas-Excimerlaser ist ein Impulsgaslaser für Gasdrücke $\geq$ 1 atm mit internem oder externem optischen Resonator, der innerhalb eines rohr- oder kastenförmigen Vorratsgefäßes ein langgestrecktes Entladungsvolumen zwischen den stabförmigen Elektroden, mindestens einen Kühler, einen Lüfter und gegebenenfalls einen Laminator zur Gasumwälzung aufweist, wobei innerhalb des Vorratsgefäßes auf einem dieses vakuum- und druckdicht verschließenden Deckel eine T-förmige Elektrode oder eine Metallplatte mit angebrachter stabförmiger Elektrode und eine integrierte Vorionisationsfunkenanordnung mittig auf einem Hochspannungsisolator und im Abstand dazu eine Gegenelektrode angeordnet sind, wobei mittels mindestens eines Bleches der Gasstrom geführt wird.

Dieses Strömungsleitblech ist beiderseits der Elektroden und Gegenelektroden wieder so geformt, daß es über die Befestigung an einem metallischen Wandstück den niederinduktiven Anschluß zu den außerhalb der Laserkammer befindlichen Kondensatoren des Laserentladungskreises herstellt und für den Betrieb mit erhöhter Folgefrequenz der Laserentladungen zwecks schnellen Gasaustauschs mit mindestens einer Öffnung beiderseits der Elektrode versehen ist.

In einer Ausführungsform besteht die Vorionisationsfunkenanordnung aus entlang und nahe der Elektrode isoliert angebrachten Vorionisationstiften und gegenüberliegenden mit der Elektrode leitend verbundenen Metallschienen, die in zwei Reihen parallel zur Mittellinie der Elektrode angeordnet sind, so daß die bei der Aufladung, der außerhalb des Vorratagefäßes (Laserkammer) angebrachten Kondensatoren, entstehenden Funken den gesamten Elektrodenzwischenraum mit hoher Intensität direkt beleuchten aber eine direkte Beleuchtung des Hochspannungsisolators unterbleibt. Gleichzeitig wird mit dieser Anordnung eine störende Sekundärentladung zur Gegenelektrode vermieden.

In einer anderen Ausführungsform, bei der Fräsarbeiten an den Elektroden bzw. Gegenelektroden aufgrund deren einfacheren Form vermieden werden können, besteht die Vorionisationsfunkenanordnung aus Vorionisationsstiften und einem Vorionisationsblech das an der Metallplatte zusammen mit mindestens einer Elektrode gasdicht von außen befestigt ist, wobei die Gegenelektrode mit weiteren Blechen auf eine Leiste montiert ist.

Auf die Leiste ist unter dem Strömungsleitblech ein zweites Blech gleich mit montiert, das die Lenkung der Gasströmung durch mindestens einen Kühler, Lüfter und gegebenenfalls einen Laminator gewährleistet, wobei die Leiste an den Enden von dicken Metallplatten, die ihrerseits fest mit dem Vorratsgefäß verbunden sind, sehr stabil gehalten wird.

Die Lenkung des Gasstromes kann auch durch die in geeigneter Weise geformte Leiste selbst realisiert werden. Außerdem kann die Stabilität des Lasers durch die Anordnung weiterer Leisten erhöht werden. Da die Gasumwälzung nahezu im Kreis geführt ist, wird ein geringer Strömungswiderstand erreicht. Das ermöglicht eine hohe Impulsfolgefrequenz.

Das Strömungsleitblech kann auf der Lüfterseite durch geeignetes Biegen so als Laminator geformt werden, daß ein gesonderter Laminator eingespart wird.

Die erfindungsgemäße Vorrichtung sichert außerdem, daß das Volumen zwischen den Elektroden durch die Funkenentladung vorionisiert wird, störende Sekundärentladungen zur gegenüberliegenden Elektrode nicht auftreten und die dem UV-Licht ausgesetzten Flächen des Hochspannungsisolators im Vorratsgefäß minimal sind und sich nicht in unmittelbarer Nähe der Hauptentladung befinden.

Durch einen geringen Abstand der Vorionisationslichtquelle von der Entladungszone wird eine sehr effektive Vorionisation im aktiven Entladungsvolumen erreicht. Trotz kleinem Abstand des Strömungsleitbleches von der Elektrode und der Vorionisationsanordnung wird durch das abgestufte Profil des Hochspannungsisolators eine ausreichende Hochspannungsfestigkeit erzielt. Wesentlich ist auch, daß der Hochspannungsisolator auf der Innenseite vorzugsweise eine Beschichtung aufweist, die aus einem Halogenkohlenwasserstoffpolymer mit UV-Licht undurchlässigen Füllstoffen, vorzugsweise Chromdioxid, besteht. Dadurch wird eine hohe chemische Stabilität des Hochspannungsisolators erreicht, insbesondere gegen restliche UV-Licht der Hauptentladung und gegen den Angriff der Halogene. Für den Hochspannungsisolator werden geeignete Verbundmaterialien eingesetzt.

Durch die Qualität des Materials und der Anordnung des Hochspannungsisolators im Inneren des Vorratsbehälters, so daß eine Abschattung vor dem direkten UV-Licht mittels eines Vorionisationsbleches gegeben ist, wird ein Schutz des Materials und infolge dessen ein Schutz vor Verunreinigung des Gases gewährleistet. Aufgrund der Form des Deckels wird die Befestigung des Strömungsleitbleches an den oberen Wandstücken des Vorratsgefäßes abgedeckt. Außerdem sind viele Gewinde durch Dichtungen vom Vorratsvolumen getrennt, weshalb auch die Gasfüllung von Verunreinigungen verschont bleibt.

Die Einbauteile weisen einfache geometrische Formen auf und erleichtern somit die Fertigung. Die Elektrode und die Gegenelektrode bestehen aus einer Aluminiumlegierung und werden nach einer chemischen Vorvernickelung galvanisch dick vernickelt (0,6 bis 0,7 mm). Alle Materialien im Inneren bestehen aus einer siliziumarmen, sehr stabilen Aluminiumlegierung oder Edelstahl.

Der erfindungsgemäße Aufbau und die Oberflächenbeschichtung der Bauteile tragen wesentlich zum stabilen Betrieb und hoher Lebensdauer der Gasfüllung des Lasers, insbesondere beim Betrieb mit halogenhaltigen Edelgasmischungen, bei.

Überraschenderweise wird durch die erfindungsgemäße Anordnung eine vorteilhafte Potentialverteilung erreicht, die zu einer hohen Energie der abgestrahlten Laserimpulse pro cm$^3$ Anregungsvolumen (>3 mJ/cm$^3$, 248 nm) und damit zu einem hohen Wirkungsgrad führt.

Der Laserentladungskreis ist mit den außen angebrachten Kondensatoren bereits sehr niederinduktiv gestaltet. Eine weitere Verbesserung des Wirkungsgrades dieses Lasers (bis 4 %) ist ohne geometrische Veränderungen durch eine Hochspannungspräpulstechnik, wie z.B. die spezielle Hochspannungsversorgung von T.J. McKee et.al. (IEEE Photonics Technologie Letters Vol. 1 (3) 1989 p.59 oder J.W. Gerritsen et.al. J.Appl.Phys. 67 (7) 1990 p. 3517-19) möglich.

Die Fenster des Vorratsgefäßes werden durch elektroakustische Filter vor dem Druckstoß der Impulsentladung und mechanischen Verunreinigungen (Staub) geschützt.

Nachfolgend soll die Erfindung anhand eines Ausführungsbeispieles in Verbindung mit den Zeichnungen näher erläutert werden.

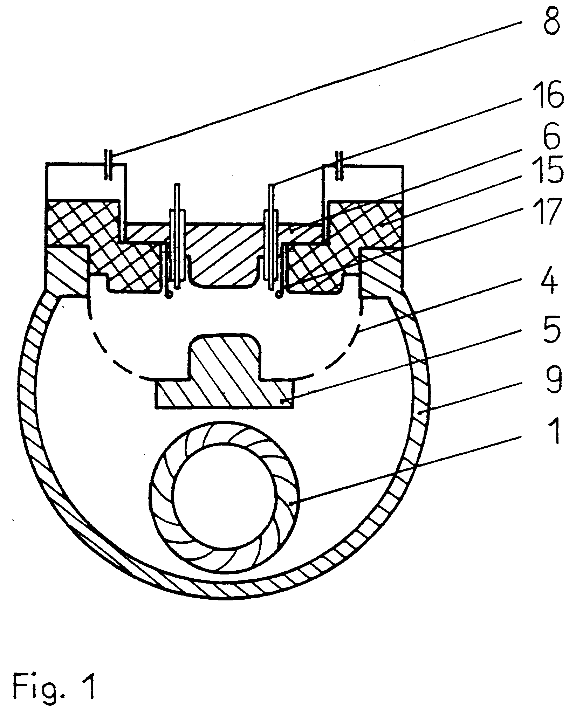

Die Fig. 1 zeigt den erfindungsgemäßen Aufbau eines einfachen Impulsgaslaser-Kopfes. Es handelt sich bei diesem Gerät um einen fluorstabilen Excimerlaser mit Gasmischungen von He/Kr/F$_2$ (1:25:500). Der erfindungsgemäße Impulsgaslaser besteht in den Grundbestandteilen aus einem Vorratsgefäß 9 mit einem vakuum- und druckdichten Deckel, der einen Hochspannungsisolator 15 und eine mittig angeordnete Elektrode 6 mit einer integrierten Vorionisationsanordnung 16 und 17 enthält, sowie einer der Elektrode 6 gegenüberliegenden justierbaren Gegenelektrode 5 .

Das Vorratsgefäß 9 wird mit Gasdrücken von 1 bis 4 atm betrieben, besteht aus Edelstahl und besitzt ein Volumen von 16 l und wird von einem Deckel verschlossen. Letzterer enthält einen Hochspannungsisolator 15, der aus einem Glasfaserverbundwerkstoff (Cevausit) besteht und der mit einem Chromdioxid-Füllstoffzusätze aufweisenden Fluorkohlenwasserstoffpolymer überzogen ist und mittig eine Öffnung aufweist, in welchem die T-förmige Elektrode 6 mit 56 integrierten Vorionisationsstiften 16 und die seitlich mit der Elektrode 6 verbundenen Metallschienen 17 gasdicht befestigt sind. Durch diese Anordnung wird erreicht, daß das zwischen der Elektrode 6 und der Gegenelektrode 5 befindliche Entladungsvolumen des Lasers von den Vorionisationsfunken direkt und intensiv bestrahlt wird.

Gemeinsam mit der Gegenelektrode 5 und dem großflächigen, aus gebogenem Metallstreifen bestehenden Strömungsleitblech 4, das zwecks Gasumwälzung mit 40 Öffnungen versehen ist, wird eine günstige Potentialverteilung bei hoher Durchbruchsspannung zwischen T-förmiger Elektrode 6 und Gegenelektrode 5 und eine hohe Effektivität der Vorionisation erreicht. Die außerhalb des Vorratsgefäßes 9 angeordneten Kondensatoren 8 des inneren Entladungskreises werden beim Zünden der Vorionisation impulsmäßig aufgeladen. Unter Betriebsbedingungen werden bei Spannungen von 25 kV keine störenden Sekundärentladungen und hohe Laserimpulsenergien bei einem Strahlguerschnitt von 8 x 22 mm$^2$ beobachtet. Im aktiven Volumen werden mit KrF 3,5 mJ/cm$^3$ bei 248 nm erreicht.

In vorteilhafter Ausgestaltung können die Metallschienen 17 und die Vorionisationsstifte 16 aus Nickel bestehen.

Das Strömungsleitblech 4 kann auf der Gasaustrittsseite des Lüfters 1 als Laminator geformt werden, wenn kein gesonderter Laminator vorgesehen wird.

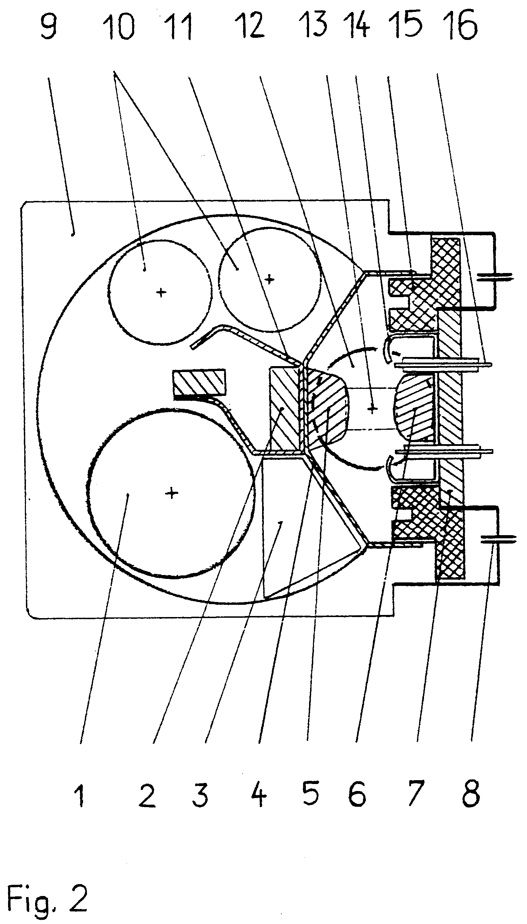

Die Fig.2 zeigt einen verbesserten Multigas-Excimerlaser mit einem langgestreckten Entladungsvolumen zwischen zwei stabförmigen Entladungselektroden 5 und 6. Er enthält auf beiden Seiten vor den üblichen und deshalb nicht dargestellten Fenstern elektroakustische Filter 12, die um die optische Achse 13 herum angeordnet sind.

Die elektroakustischen Filter 12 bestehen aus einer oder mehreren dünnen Metallfolien, die in der Mitte eine Öffnung für den Durchgang des Laserstrahles haben, wobei diese Metallfolien hochspannungsisoliert und statisch gegenüber der Wand auf Hochspannungspotential liegen und/oder wechselseitiges Anlegen des Hochspannungspotentials gestatten und durch ihre elastische Deformation den Druckstoß der Impulsentladung in Richtung der Fenster des Vorratsgefäßes dämpfen.

Die optische Achse 13 des Laserstrahls liegt innerhalb des Entladungsvolumens in einem rohr- oder kastenförmigen Vorratsgefäß 9. Die stabförmigen Entladungselektroden 5 bzw. 6 sind zusammen mit je einem auf beiden Seiten überstehenden Blech 4 bzw. 14 auf die Metall-Leiste 2 bzw. Metallplatte 7 geschraubt. Die Leiste 2 wird mittels mit dem Vorratsgefäß 9 verbundenen dicken (in Fig.2 nicht dargestellten) Metallplatten an den Enden zu Justierzwecken arretiert und tragend befestigt. Diese die Leiste 2 tragenden Metallplatten werden vorzugsweise durch mindestens eine weitere gleichlange Leiste stabilisiert und dienen außerdem der Befestigung des Lüfters 1, der Kühler 10 und gegebenenfalls des Laminators 3.

Das überstehende Blech 14 ist zu der Elektrode 6 so gebogen, daß es zusammen mit den in Hochspannungsdurchführungen angeordneten Vorionisationsstiften 16 für Funkenentladungsvorionisation geeignet ist. An der Gegenelektrode 5 wird das Strömungsleitblech 4 so gebogen und an den oberen Wandstücken des Vorratsgefäßes 9 befestigt, daß es einen niederinduktiven Anschluß für die Kondensatoren 8 des Entladungskreises bildet. Für den Betrieb mit höheren Folgefrequenzen ist das Strömungsleitblech 4 mit Öffnungen versehen und in das Vorratsvolumen sind mindestens ein Kühler 10, mindestens ein Lüfter 1 und gegebenenfalls ein Laminator 3 für den Gasaustausch in der Entladungszone eingebaut. Ein gesonderter Laminator 3 kann entfallen, wenn das Strömungsleitblech 4 auf der Lüfterseite als Laminator geformt wird.

Auf die Leiste 2 ist ein zweites Blech 11 gleich mit montiert, das die Lenkung der Gasströmung durch mindestens einen Kühler 10, Lüfter 1 und gegebenenfalls einen Laminator 3 gewährleistet, wobei die Leiste 2 an den Enden von (in der Figur 2 nicht dargestellten) Metallplatten, die ihrerseits fest mit dem Vorratsgefäß 9 verbunden sind, sehr stabil gehalten wird.

Die Lenkung des Gasstromes kann durch die in geeigneter Weise geformte Leiste 2 selbst realisiert werden. Außerdem kann die Stabilität des Lasers durch die Anordnung weiterer Leisten erhöht werden. Da die Gasumwälzung nahezu im Kreis geführt ist, wird ein geringer Strömungswiderstand erreicht. Das ermöglicht eine hohe Impulsfolgefrequenz.

Die stabförmige Elektrode 6 wird in vorteilhafter Weise über in Figur 2 nicht dargestellte Schraubverbindungen von außen befestigt. Diese die Gasfüllung nicht verunreinigende Schraubenverbindungen dienen außerdem zur Befestigung des Vorionisationsbleches 14.

Die ebenfalls stabförmige Gegenelektrode 5 läßt sich hinsichtlich ihrer Parallelität und des Abstandes zur Elektrode 6 einfach justieren, da ihre Befestigung im Vorratsgefäß 9 über die an den Enden tragend befestigte Leiste 2, unabhängig von der erforderlichen großflächigen Stromrückführung erfolgt und für ein ausreichend großes Spiel an den Enden gesorgt wird.

Es ist vorteilhaft, daß der Hochspannungsisolator 15 einen minimalen Abstand zwischen dem Vorionisationsblech 14 und dem Strömungsleitblech 4 zum niederinduktiven Kondensatoranschluß gewährleistet, indem seine innenliegende Oberfläche durch ein nicht ebenes abgestuftes Profil und eine spezielle mit inerten Pigmenten versehene Lackbeschichtung chemisch resistent und hochspannungsfest gestaltet wird, insbesondere, wenn die Lackbeschichtung aus einem Halogenkohlenwasserstoffpolymer mit UV-Licht absorbierenden Füllstoffen besteht und als Füllstoff Chromdioxid eingesetzt wird.

Es ist weiterhin vorteilhaft, wenn die Elektrode 6 und Gegenelektrode 5 vorzugsweise aus einer Aluminiumlegierung bestehen und chemisch vorvernickelt und galvanisch mehrere Zehntel Millimeter dick vernickelt sind und mindestens eine Elektrode oder Gegenelektrode ein zur optischen Achse hin leicht gewölbtes Profil aufweist und alle Einbauten und das Vorratsgefäß selbst vorzugsweise aus chemisch resistenten Metall hergestellt sind. Es hat sich als günstig erwiesen, wenn alle Einbauten aus einer weitgehend siliziumfreien sehr stabilen Aluminiumlegierung bestehen.

**Patentansprüche**

1. Multigas-Excimerlaser mit Funkenvorionisationsanordnung, mit langgestrecktem Entladungsvolumen und mit einem Lüfter innerhalb sowie mit Kondensatoren des Entladungskreises außerhalb eines rohr- oder kastenförmigen Vorratsgefäßes, dessen in einem optischen Resonator angeordnetes, langgestrecktes Entladungsvolumen zwischen einer stabförmigen auf einen abnehmbaren deckelförmigen Hochspannungsisolator montierten Elektrode und einer Gegenelektrode liegt, **dadurch gekennzeichnet,**

   - daß die Funkenvorionisationsanordnung aus hochspannungsisolierten in das Vorratsgefäß (9) nahe der Elektrode (6) eingeführten Vorionisationsstiften (16) und einem zur optischen Achse (13) hin gebogenem Vorionisationsblech (14, 17) besteht, welches an einer Metallplatte (7) und/oder stabförmigen Elektrode (6) befestigt ist, die mittig auf dem Hochspannungsisolator (15) gasdicht montiert wird,

   - daß an der Gegenelektrode (5) Mittel zur Lenkung der Gasströmung über die Elektroden (5, 6) durch mindestens einen Kühler (10) und den Lüfter (1) vorgesehen sind, so daß die Gasumwälzung bei minimalem Strömungswiderstand nahezu im Kreis geführt wird, wobei ein mit der Gegenelektrode (5) verbundenes und Öffnungen aufweisendes Strömungsleitblech (4), beiderseits des langgestreckten Entladungsvolumens so geformt ist, daß es über eine Randbefestigung an den oberen Wandstücken des Vorratsgefäßes (9) den niederinduktiven Anschluß zu den außerhalb des Vorratsgefäßes (9) befindlichen Kondensatoren (8) herstellt,

   - daß der Hochspannungsisolator (15) die Randbefestigung des Strömungsleitbleches (4) im Innerem des Vorratsgefäßes (9) abdeckt und einen minimalen Abstand zwischen dem Strömungsleitblech (4) und der stabförmigen Elektrode (6) sowie mindestens einem Vorionisationsblech realisiert und daß seine Abschattung von direktem UV-Licht mittels des Vorionisationsbleches (14, 17) gewährleistet wird.

2. Multigas-Excimerlaser insbesondere nach Anspruch 1 **dadurch gekennzeichnet,** daß beiderseits des langgestreckten Entladungsvolumens zum Schutz der Fenster des Vorratsgefäßes vor Verunreinigungen elektroakustische Filter (12) angeordnet sind, die jeweils aus mindestens einer dünnen Metallfolie bestehen, welche die optische Achse (13) umschließen und in der Mitte eine Öffnung für den Durchgang des Laserstrahls haben, wobei mindestens eine dieser Metallfolien hochspannungsisoliert ist und entweder statisch gegenüber der Wand auf Hochspannungspotential liegt oder ein wechselseitiges Anlegen des Hochspannungspotentials gestattet und durch ihre elastische Deformation den Druckstoß der Impulsentladung in Richtung der Fenster des Vorratsgefäßes dämpfen.

3. Multigas-Excimerlaser nach Anspruch 1, **dadurch gekennzeichnet**, daß der Hochspannungsisolator (15) einen minimalen Abstand zwischen dem Vorionisationsblech (14) und dem Strömungsleitblech (4) gewährleistet, indem seine innenliegende Oberfläche durch ein nicht ebenes abgestuftes Profil und eine spezielle mit inerten Pigmenten versehene Lackbeschichtung chemisch resistent und hochspannungsfest gestaltet wird.

4. Multigas-Excimerlaser nach Anspruch 3, **dadurch gekennzeichnet,** daß der Hochspannungsisolator (15) aus einem nur bedingt chemisch resistenten Verbundwerkstoff besteht und die Lackbeschichtung aus einem Halogenkohlenwasserstoffpolymer mit UV-Licht undurchlässigen Füllstoffen besteht, wobei vorzugsweise als Füllstoff Chromdioxid eingesetzt wird.

5. Multigas-Excimerlaser insbesondere nach Anspruch 1, **dadurch gekennzeichnet,** daß die stabförmigen Elektroden (6) und Gegenelektroden (5) vorzugsweise aus einer Aluminiumlegierung bestehen und chemisch vorvernickelt und galvanisch mehrere Zehntel Millimeter dick vernickelt sind oder durch Plasmaspritzen eine gleichdicke Nickelschicht erhalten und mindestens eine der Elektroden (5, 6) ein zur optischen Achse (13) hin leicht gewölbtes Profil aufweist.

6. Multigas-Excimerlaser nach Anspruch 1, **dadurch gekennzeichnet,** daß das Strömungsleitblech (4) mindestens zusammen mit der Gegenelektrode (5) auf eine Leiste (2) montiert ist und die Leiste (2) an ihren Enden sehr stabil von dicken Metallplatten gehalten wird, welche ihrerseits fest mit dem Vorratsgefäß verbunden sind und auf an sich bekannte Art und Weise eine schraubverbindungsarme Befestigung von allen Mitteln im Innerem des Vorratsgefäßes (9) realisiert und eine Justierung des Abstandes der Elektroden und ihrer Parallelität, durch ein ausreichend großes Spiel der Befestigung der Leiste (2) oder Gegenelektrode (5) an ihren Enden erreicht wird.

7. Multigas-Excimerlaser nach Anspruch 6, **dadurch gekennzeichnet,** daß ein zweites an der Leiste (2) befestigtes Blech (11) die Lenkung der Gasströmung durch den Kühler (10) und den Lüfter (1) gewährleistet oder daß die Lenkung der Gasströmung durch den Kühler (10) und Lüfter (1) aufgrund des Profils der Leiste (2) erfolgt.

8. Multigas-Excimerlaser nach Ansprüchen 6 und 7, **dadurch gekennzeichnet,** daß neben der Leiste (2) mindestens eine weitere Leiste, die an den Enden ebenfalls tragend befestigt ist, zur Erhöhung der Stabilität der Anordnung vorgesehen ist.

9. Multigas-Excimerlaser nach Anspruch 1, **dadurch gekennzeichnet,** daß das Vorionisationsblech (14) an der Metallplatte (7) zusammen mit der stabförmigen Elektrode (6) von außen gasdicht befestigt wird oder anstelle des Vorionisationsbleches (14) mindestens zwei Metallschienen (17) eingesetzt werden, die an der Elektrode (6) befestigt sind, wobei die stabförmige Elektrode (6) mit der Metallplatte (7) sowie die Gegenelektrode (5) mit der Leiste (2) T-förmig ausgebildet und insbesondere einstückig gefertigt sind und die Metallschienen (17) und die Vorionisationsstifte (16) vorzugsweise aus Nickel bestehen.

10. Multigas-Excimerlaser nach einem der vorangehenden Ansprüche, **dadurch gekennzeichnet,** daß das Strömungsleitblech (4) auf der Lüfterseite als Laminator geformt oder ein gesonderter Laminator (3) vorgesehen wird und daß alle Einbauten und das Vorratsgefäß (9) selbst vorzugsweise aus chemisch resistentem Metall hergestellt sind, insbesondere alle Einbauten aus einer weitgehend siliziumfreien sehr stabilen Aluminiumlegierung bestehen.

8

16

6

15

17

4

5

9

1

Fig. 1

9    10   11    12    13 14   15   16

1    2    3    4    5    6    7    8

Fig. 2

**Europäisches Patentamt**

# EUROPÄISCHER RECHERCHENBERICHT

Nummer der Anmeldung

EP 91 10 3440

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN, Band 13, Nr. 507 (E-845)[3855], 14. November 1989; & JP-A-1 205 485 (HAMAMATSU PHOTONICS) 17-08-1989 * Insgesamt * --- | 1,6,7 | H 01 S 3/038 H 01 S 3/036 |
| A | PATENT ABSTRACTS OF JAPAN, Band 13, Nr. 155 (E-743)[3503], 14. April 1989; & JP-A-63 313 883 (POWER REACTOR & NUCLEAR FUEL DEV.) 21-12-1988 * Insgesamt * --- | 1,6,7,9 | |
| A | US-A-4 802 185 (Y. KYUSHO) * Ansprüche 1-13; Figuren 1-5 * --- | 1 | |
| A | PATENT ABSTRACTS OF JAPAN, Band 12, Nr. 337 (E-657)[3184], 12. September 1988; & JP-A-63 100 786 (KOMATSU) 02-05-1988 * Insgesamt * --- | 1,6,7 | |
| A | PATENT ABSTRACTS OF JAPAN, Band 9, Nr. 15 (E-291)[1738], 22. Januar 1985; & JP-A-59 163 881 (AMADA) 14-09-1984 * Insgesamt * ----- | 1,6,7 | RECHERCHIERTE SACHGEBIETE (Int. Cl.5) H 01 S |

Der vorliegende Recherchenbericht wurde für alle Patentansprüche erstellt

| Recherchenort | Abschlußdatum der Recherche | Prüfer |
|---|---|---|
| DEN HAAG | 29-10-1991 | MALIC K. |